# EUROPÄISCHE PATENTANMELDUNG

(11) **EP 0 808 555 A1**
(43) Veröffentlichungstag der Anmeldung: **26.11.1997**
(21) Anmeldenummer: 97101419.6
(22) Anmeldetag: 30.01.1997
(51) Int. Cl.: A01B 1/14

(54) **Einhandgerät zum Auflockern und Krümeln von kleinen Bodenflächen**

(30) Priorität: 25.05.1996 DE 29609395 U; 26.08.1996 DE 29614783 U
(71) Anmelder: Glässer, Wolf-Achim, Dipl.-Ing., 09526 Olbernhau (DE); Sandholzer, Hartwig, D-60388 Frankfurt (DE)
(72) Erfinder: Glässer, Wolf-Achim, Dipl.-Ing., 09526 Olbernhau (DE); Sandholzer, Hartwig, D-60388 Frankfurt (DE)

(57) **Zusammenfassung**

Für das Auflockern und Krümeln von kleinen Bodenflächen mit sehr eng stehenden Pflanzen, wie z.B. in Balkonkästen und Blumentöpfen, stehen bisher keine geeigneten Handgeräte zur Verfügung.
Das Auflockern des Bodens mit den herkömmlichen Gartengeräten in verkleinerter Form führt zu Beschädigungen an den eng stehenden Pflanzen.
Mit einem Einhandgerät, dessen Arbeitsbewegung aus einem senkrechten Einsetzen in das Erdreich und aus einer leichten Drehbewegung um den Stiel in einem bestimmten Winkelbereich besteht, sind Beschädigungen an eng stehenden Pflanzen nicht mehr gegeben.
Das Einhandgerät besteht aus dem Handgriff (4), dem Stiel (3) und dem Erdbeweger (1) mit den Erdbewegerelementen (2).

## Beschreibung

Die Erfindung bezieht sich auf ein Einhandgerät zum Auflockern und Krümeln von kleinen Bodenflächen mit sehr eng stehenden Pflanzen, wie z.B. in Balkonkästen oder Blumentöpfen.

Zum Auflockern und Krümeln von normalen Gartenflächen mit Pflanzen, wie Beete, stehen bereits unterschiedliche Handgeräte wie Spaten, Gabelspaten, rotierende Zinkensterne u.ä. zur Verfügung. Weiterhin sind Handgeräte mit Zinken bekannt, deren Zinken in das Erdreich gedrillt werden, und durch Drehung mit beiden Händen an einem Quersteg des Stiels erfolgt ein Auflockern des Gartenbodens. Das Handgerät wird entsprechend weitergesetzt, so daß nach und nach die Gartenfläche gelockert wird. Bei der auf Drehung der Zinken um den Stiel basierenden Bodenbearbeitung bleiben die Bodenschichten mit ihren Bodenorganismen in der ursprünglichen Folge nahezu erhalten. Das hat große Vorteile bezüglich der Humusbildung im Erdreich. Diese Geräte sind aber nur geeignet für größere Bodenflächen mit weiter auseinander stehenden Pflanzen. Solche Geräte sind aus den Patentschriften USA 2.855.668, USA 3.129.771, USA 4.456.075, EP 0700631, EP 0264711, G 29519423, G 9413417, G 29601048 bekannt.

Für das Auflockern und Krümeln von kleinen Bodenflächen mit sehr eng stehenden Pflanzen, wie z.B. in Balkonkästen und Blumentöpfen stehen keine geeigneten Geräte zur Verfügung. Das Bodenlockern mit den herkömmlichen Gartengeräten, wie Rechen, Hacken, Spaten in verkleinerter Form führt zu Beschädigungen an den eng stehenden Pflanzen. Die Beschädigungen entstehen auf Grund der hin- und hergehenden Arbeitsbewegungen des Stieles mit dem daran befestigten kleinen Werkzeug.

Gegenstand der Erfindung ist, ein Handgerät zu schaffen, daß in seiner geometrischen und funktionellen Ausbildung von den bekannten Lösungen so weiterzuentwickeln ist, daß es bei sehr kleinen Bodenflächen mit sehr eng stehenden Pflanzen verwendet werden kann, ohne daß dabei das Pflanzgut beim Lockern und Krümeln des Bodens zwischen den Pflanzen beschädigt wird und dessen Arbeitsbewegung aus einem senkrechten oder auch schrägen Einsatz des Einhandgerätes in das Erdreich und aus einer leichten Drehbewegung um den Stiel in einem bestimmten Winkelbereich besteht. Erfindungsgemäß wird dies bei einem Einhandgerät des obigen Typs dadurch erreicht, daß die Gesamtlänge des Einhandgerätes kleiner als 400mm, vorzugsweise 220mm, die Breite des Erdbewegers kleiner als 70mm, vorzugsweise 40mm und die Länge des Erdbewegers kleiner als 100mm, vorzugsweise 60mm, ausgeführt wird und daß der Erdbeweger aus parallel oder in einem bestimmten Winkel zueinander verlaufenden Erdbewegerelementen in Form von Stäben mit einem bestimmten Querschnitt, die direkt oder über eine Stegplatte am Stiel befestigt sind, besteht und daß die Erdbewegerelemente als gerade Linie und/oder als Knick und/oder als Bogen verlaufend gestaltet sind und daß die Erdbewegerelemente in der Ebene oder auch in einem bestimmten Raum angeordnet sind.

Das erfindungsgemäße Einhandgerät weist verschiedene Vorteile auf. Auf Grund der Dimensionierung der Gesamtlänge des Einhandgerätes sowie des Erdbewegers mit den Erdbewegerelementen kann wirkungsvoll zwischen sehr eng stehenden Pflanzen der Boden gelockert und gekrümelt werden, indem das Einhandgerät von oben senkrecht oder etwas schräg in den Zwischenraum des Pflanzenwuchses eingesetzt und in den Boden gedrückt wird. Durch leichte Drehbewegung am Griff mit der Hand erfolgt die Lockerung des Bodens. Dabei werden die Pflanzen mit ihren Blüten, Blättern und Stielen nicht beschädigt, da sich nur der Stiel des Erdbewegers bei der Lockerungsbewegung zwischen den Pflanzen befindet.
Ein weiterer Vorteil ist, daß der Erdbeweger des Einhandgerätes einstufig als Blechschnitteil, Blechumformteil, Spritzgießteil oder Gußteil hergestellt werden kann.
Ein Gelenk im Stiel ermöglicht auch, den Erdbeweger als kleine Hacke zu benutzen.

Im folgenden wird die Erfindung anhand von Beispielen und mit Bezug auf die beiliegenden Zeichnungen näher erläutert. Es zeigen:
- Abb. 1: : Perspektivische Darstellung des Einhandgerätes
- Abb. 2 bis 4: : Anordnung der Erdbewegerelemente
- Abb. 5 bis 7: : Darstellung der räumlichen Anordnung von Erdbewegerelementen
- Abb. 8: : Eine Variante des Erdbewegers mit Stegplatte
- Abb. 9 bis 11: : Ausführungsformen der Erdbewegerelemente
- Abb. 12 bis 14: : Darstellung der ebenen und der räumlichen Anordnung der Erdbewegerelemente
- Abb. 15 und 16: : Erdbewegerelemente als durchgehend gebogener Stab
- Abb. 17: : Variante von Erdbewegerelementen
- Abb. 18: : Erdbeweger als Umformteil
- Abb. 19: : Querschnitte der Stäbe für die Erdbewegerelemente
- Abb. 20 und 21: : Perspektivische Darstellung eines einstückigen Erdbewegers
- Abb. 22 und 23: : Erdbeweger als Schnitteil und dessen Befestigung
- Abb. 24 und 25: : Einhandgerät mit Gelenk im Stiel

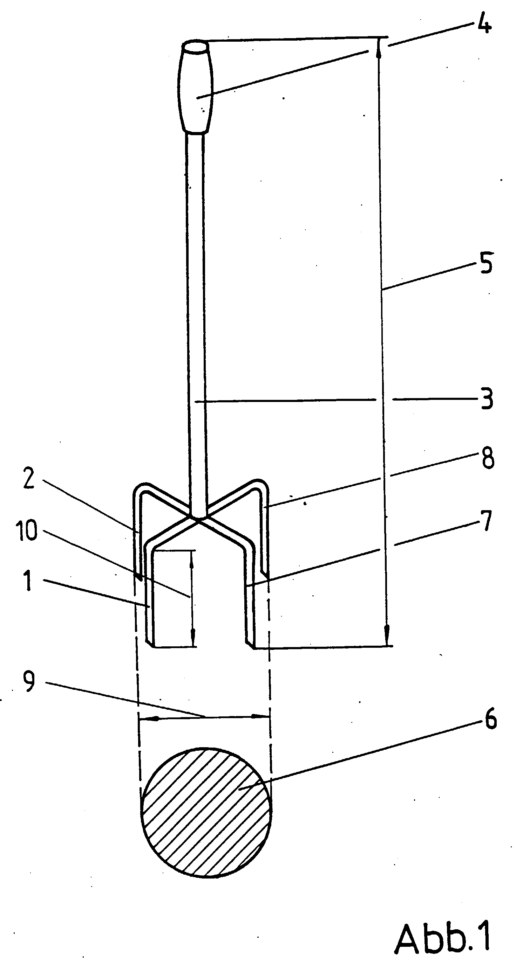

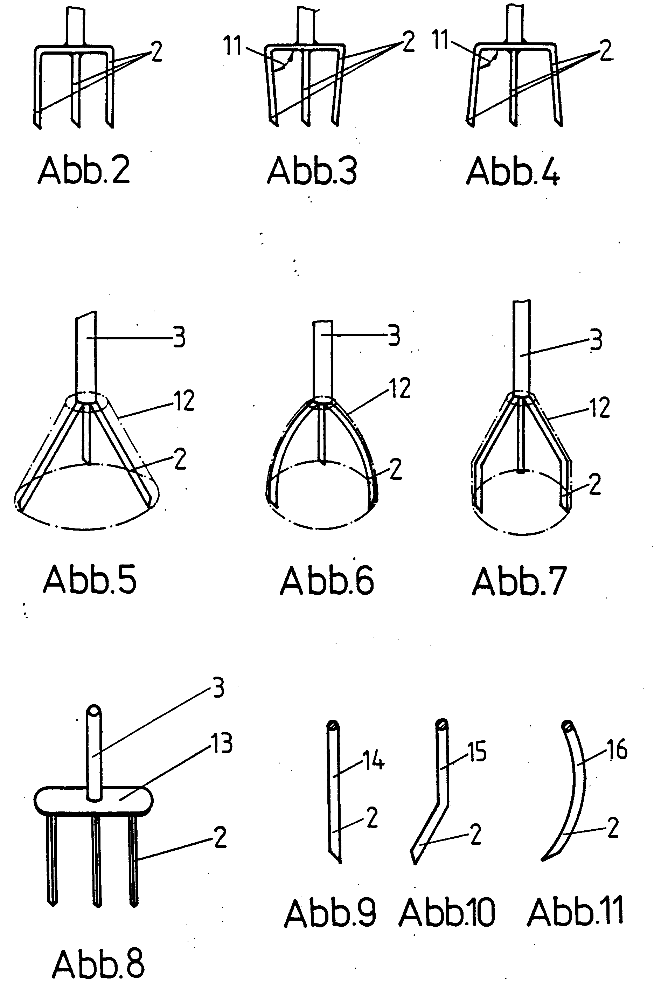

In der Abbildung 1 ist das Einhandgerät mit dem Erdbeweger 1, dem Stiel 3 und dem Einhandgriff 4 dargestellt. Als Einhandgriff 4 kann auch ein kleiner Quersteg am Stielende befestigt werden. Der Erdbeweger 1 besteht aus parallel zueinander und als gerade Linie verlaufenden Erdbewegerelementen 2. Die Erdbewegerelemente sind als Zinken 7 ausgeführt. Die Zinken 7 sind die Schenkel von zwei u-förmig gebogenen Stäben 8, die direkt am Stiel 3 angeordnet sind.
In dem Ausführungsbeispiel soll der Erdbeweger 1 eine Breite 9 von 40mm und eine Länge 10 von 60mm besitzen. Mit einer solchen Breite 9 und Länge 10 kann mit dem Erdbeweger 1 durch alternierende Drehbewegungen der Boden zwischen den engstehenden Pflanzen in der Nähe der Wurzeln der Pflanzen ohne Probleme gelockert werden. Die Gesamtlänge 5 des Einhandgerätes beträgt 300mm, so daß der Stiel über dem Pflanzenwuchs herausragt. Die Größe des Erdbewegers 1 sollte bei der alternierenden Drehbewegung mit einer Hand keine größere Rotationsfläche 6 als 80cm² erfassen. Wird das Einhandgerät größer ausgelegt, so ist es nur noch für die normale Bodenbearbeitung , z.B. für Beete, geeignet.

In den Abbildungen 2 bis 4 ist die Anordnung der Erdbewegerelemente 2 dargestellt. Sie können gemäß Abbildung 2 parallel oder auch wie in den Abbildung 3 und 4 gezeigt, in einem bestimmten Winkel 11 zueinander verlaufen.

In den Abbildungen 5 bis 7 ist eine räumliche Anordnung der Erdbewegerelemente 2 gezeigt. Durch ihre Anordnung zum Stiel 3 nehmen die Erdbewegerelemente 2 eine räumliche Mantelfläche ein, d.h. sie nehmen einen bestimmten Raum 12 ein.

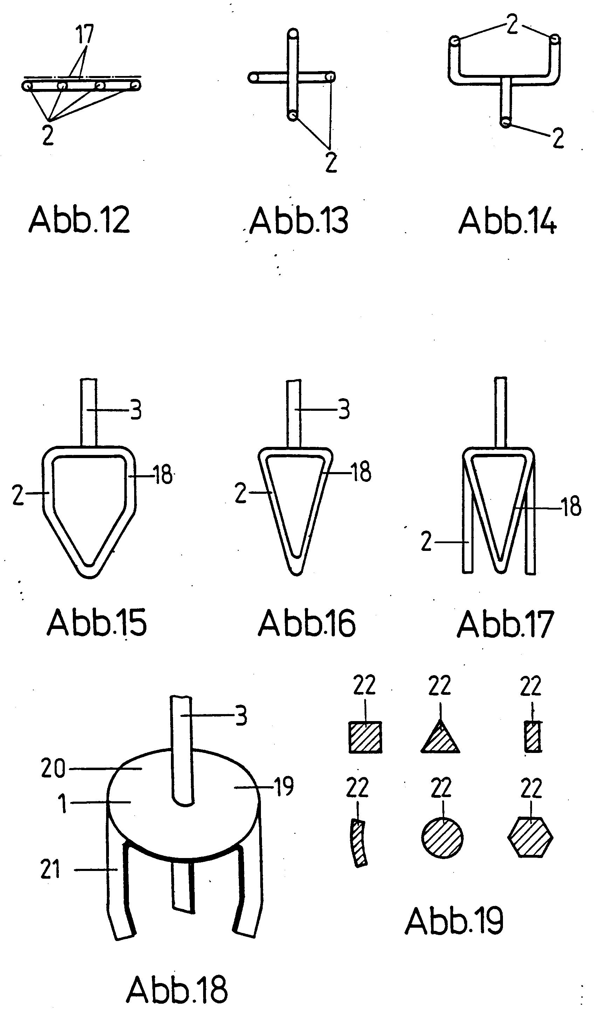

Die Abbildung 8 enthält eine Verbindung der Erdbewegerelemente 2 zum Stiel 3 mittels Stegplatte 13. In den Abbildungen 9 bis 11 sind unterschiedliche geometrische Formen von Erdbewegerelementen 2 gezeigt. Sie werden als Einzelteile ohne die übrigen zum Einhandgerät gehörenden Bauteile dargestellt. In der Abbildung 9 ist das Erdbewegerelement 2 in Form einer geraden Linie 14 gezeichnet, die Abbildung 10 beinhaltet den Knick 15 des Erdbewegerelementes 2 und die Abbildung 11 den Bogen 16.

In der Abbildung 12 ist die Anordnung der Erdbewegerelemente 2 in der Ebene 17 erkennbar.

In den Abbildungen 13 und 14 werden die Erdbewegerelemente 2 von unten gezeigt. Daraus ist ersichtlich, daß die Erdbewegerelemente 2 in ihrer Anordnung einen bestimmten Raum einnehmen. Die Abbildungen 13 und 14 sind analog den Abbildungen 5 bis 7, jedoch sind die Erdbewegerelemente 2 in anderer Anordnung von unten gezeigt.

Nach Abbildung 15 und 16 sind die Erdbewegerelemente 2 als durchgehend geschlossene gebogene Stäbe 18 ausgeführt. In den Abbildungen ist der Erdbeweger v-förmig mit und ohne parallel verlaufende Geraden ausgebildet. Die durchgehend gebogenen Stäbe 18 können über eine Zwischenplatte oder direkt mit dem Stiel 3 befestigt werden.

Die Abbildung 17 zeigt eine Kombination der Erdbewegerelemente, bestehend aus einem durchgehend gebogenen Stab 18 gemäß den Abbildungen 15 und 16 und einem parallel verlaufenden Erdbewegerelement 2 gemäß der Abbildung 2. Die Erdbewegerelemente 2 und 18 sind an dem Stiel 3 befestigt.

In der Abbildung 18 ist der Erdbeweger 1 als Blechumformteil 19 ausgeführt. Das Blechumformteil 19 ist als Scheibe 20 mit Erdbewegerelementen 21 gestaltet. Die Erdbewegerelemente 21 werden durch einen Biegearbeitsgang mittels Umformwerkzeug von dem ebenen Schnitteil hochgestellt. Das Blechumformteil 19 ist mit dem Stiel 3 durch Nietung verbunden. Aus der Abbildung 19 sind verschiedene Querschnitte 22 für die Stäbe der Erdbewegungselemente ersichtlich.

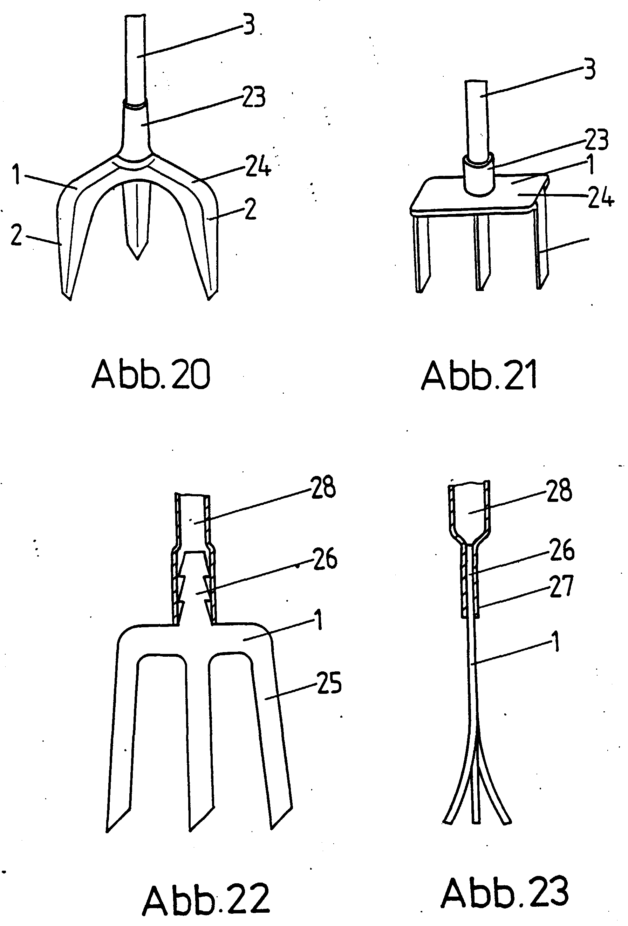

In den Abbildungen 20 und 21 ist ein einstückiger Erdbeweger, aus Kunststoff oder Metall hergestellt, abgebildet. Der Erdbeweger 1 besteht aus der Stieltülle 23 und den Erdbewegerelementen 2. Der gesamte Erdbeweger 1 ist aus einem Stück als Spritzgießteil 24, Preßteil 24 oder Gußteil 24 hergestellt. In der angeformten Stieltülle 23 wird der Stiel 3 befestigt.

In den Abbildungen 22 und 23 ist der Erdbeweger 1 als Blechschnitteil 25 ausgeführt. An dem Erdbeweger 1 ist ein Ansatz 26 angeformt, der dazu dient, daß der Erdbeweger 1 in einem flachgedrückten Ende 27 des rohrförmigen Stieles 28 befestigt werden kann.

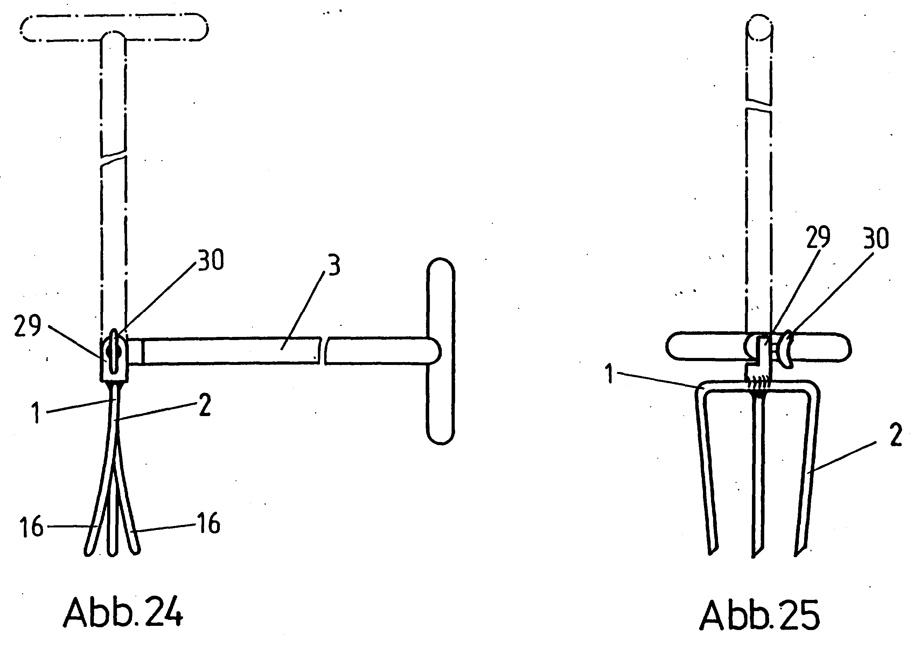

Die Abbildungen 24 und 25 zeigen ein Einhandgerät mit Stiel 3 und einem Erdbeweger 1 mit den Erdbewegerelementen 2 als Bogen 16 verlaufend angeordnet.
Das Gelenk 29 im Stiel 3 ermöglicht ein Abwinkeln des Stieles 3 in einem Winkelbereich bis zu 90°. Diese Variante gemäß Abbildungen 24 und 25 kann bei abgewinkeltem Erdbeweger 1 als kleine Hacke verwendet werden. In den Abbildungen 24 und 25 ist strichpunktiert die Lage des Stieles 3 im geraden Zustand gezeichnet. Das Abwinkeln kann in Stufen mit entsprechenden Rastungen oder auch stufenlos erfolgen. Im Ausführungsbeispiel ist eine stufenlose Verstellung mittels Flügelschraube 30 angegeben.

## Patentansprüche

1. Einhandgerät zum Auflockern und Krümeln von kleinen Bodenflächen mit sehr eng stehenden Pflanzen, bestehend aus einem Erdbeweger (1), Erdbewegerelementen (2), dem Stiel (3) und dem Einhandgriff (4), gekennzeichnet durch folgende Merkmale:
- die Gesamtlänge (5) des Einhandgerätes ist kleiner als 400mm, vorzugsweise 220mm, die Breite (9) des Erdbewegers (1) ist kleiner als 70 mm, vorzugsweise 40mm und die Länge (10) des Erdbewegers (1) ist kleiner als 100mm, vorzugsweise 60mm.
- der Erdbeweger (1) besteht aus parallel oder in einem bestimmten Winkel (11) zueinander verlaufenden Erdbewegerelementen (2) in Form von Stäben (8) mit einem bestimmten Querschnitt, die direkt oder über eine Stegplatte (13) am Stiel (3) angeordnet sind
- die Erdbewegerelemente (2) sind als gerade Linie (14) und/oder als Knick (15) und/oder als Bogen verlaufend angeordnet
- die Erdbewegerelemente sind in der Ebene (17) oder auch in einem bestimmten Raum (12) angeordnet

2. Einhandgerät nach Anspruch 1, dadurch gekennzeichnet, daß die Erdbewegerelemente als geschlossene durchgehende Stäbe gebogen sind.

3. Einhandgerät nach Anspruch 1 und 2, dadurch gekennzeichnet, daß die aus geschlossenen durchgehend gebogenen Stäbe (18) angeordneten Erdbewegerelementen (2) mit Stäben (8) gemäß Anpruch 1 kombinierbar sind.

4. Einhandgerät nach Anspruch 1 bis 3, dadurch gekennzeichnet, daß die Erdbeweger (1) einstückig als Blechschnitteil (25), Blechumformteil (19), als Spritzgießteil (24), Preßteil (24) oder Gußteil (24) am Stiel (3) angeordnet sind

5. Einhandgerät nach Anspruch 1 bis 4, dadurch gekennzeichnet, daß der Stiel (3) ein in Stufen oder stufenlos verstellbares Gelenk (29) aufweist, in dem der Erdbeweger (1) bis zu 90° bezogen auf den Stiel (3) abgeklappt werden kann.

6. Einhandgerät nach Anspruch 1 bis 5, dadurch gekennzeichnet, daß der Erdbeweger mit einem Ansatz (26) in einem flachgedrückten Ende (27) des Stieles (28) befestigt wird.
